(19) Europäisches Patentamt
European Patent Office
Office européen des brevets

(11) **EP 1 791 201 A1**

(12) **EUROPÄISCHE PATENTANMELDUNG**

(43) Veröffentlichungstag:
**30.05.2007 Patentblatt 2007/22**

(51) Int Cl.:
***H01M 8/02*** *(2006.01)*      ***H01M 8/04*** *(2006.01)*

(21) Anmeldenummer: **06024598.2**

(22) Anmeldetag: **28.11.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **28.11.2005 DE 102005056844**
             **30.01.2006 DE 102006004348**

(71) Anmelder: **Behr GmbH & Co. KG**
**70469 Stuttgart (DE)**

(72) Erfinder:
• **Kaiser, Wolfram, Dr.-Ing.**
**70437 Stuttgart (DE)**
• **Watzlawski, Markus, Dipl.-Ing.**
**73760 Ostfildern (DE)**

(74) Vertreter: **Mantel, Berthold Friedrich**
**Behr GmbH & Co. KG**
**Intellectual Property, G-IP**
**Mauserstrasse 3**
**70469 Stuttgart (DE)**

(54) **Bipolarplatte**

(57) Die Erfindung beschreibt eine Bipolarplatte (1) für einen Brennstoffzellenstapel, die zusammengesetzt ist aus zwei profilierten Formteilen (2, 3), welche ein Kühlströmungsfeld (15) für ein Kühlfluid bilden und Öffnungen als Zuführungen (14) für das Kühlfluid aufweisen, wobei die Öffnungen von in beide Formteile (2, 3) entgegengesetzt geprägten, einander gegenüberliegenden Dichtungsnuten (4, 5), welche Randstege (6, 7) und Bodenflächen (9, 10) aufweisen und Dichtungen aufnehmen, zumindest teilweise umgeben sind und zwischen den Bodenflächen (9, 10) eines Paares von einander derartig gegenüberliegenden Dichtungsnuten (4, 5) ein Spalt (8) angeordnet ist, der als Strömungskanal für das Kühlfluid eine jeweilige Zuführung (14) und das Kühlströmungsfeld (15) miteinander verbindet.

**Fig. 1**

EP 1 791 201 A1

**Beschreibung**

Die Erfindung betrifft eine Bipolarplatte, insbesondere für einen Brennstoffzellenstapel eines Fahrzeugs.

Die Umwandlung von chemischer in elektrische Energie mittels Brennstoffzellen stellt eine effiziente und umweltfreundliche Methode zur Gewinnung von elektrischem Strom aus den Elementen Wasserstoff und Sauerstoff dar. Dabei finden üblicherweise zwei räumlich getrennte Elektrodenreaktionen statt, bei denen Elektronen freigesetzt beziehungsweise gebunden werden. Die Reaktanden Sauerstoff und Wasserstoff können in Form verschiedener Fluide bereitgestellt werden, sie müssen nicht zwingend in reiner Form vorliegen. Die Verwendung von reinem, molekularem Sauerstoff und Wasserstoff ist beispielsweise ebenso möglich wie die Verwendung von Luftsauerstoff und Methan. Ein erstes Beispiel für zwei korrespondierende Elektrodenreaktionen sind folgende Reaktionen:

$$H_2 => 2H^+ + 2e^- \text{ (Anodenreaktion)}$$

$$2H^+ + 2e^- + \tfrac{1}{2}O_2 \Rightarrow H_2O \text{ (Kathodenreaktion)}$$

Die Art der Reaktion hängt von der Bauart der Brennstoffzelle und von den verwendeten Fluiden ab. Ein zweites Beispiel für zwei korrespondierende Elektrodenreaktionen sind folgende Reaktionen:

$$H_2 + O_2^- => H_2O + 2e^- \text{ (Anodenreaktion A)}$$

$$CO + O_2^- => CO_2 + 2e^- \text{ (Anodenreaktion B)}$$

$$O2 + 4e^- => 2O_2^- \text{ (Kathodenreaktion)}$$

Allen Brennstoffzellen gemein sind einerseits der Transport einer Ionenart durch einen Elektrolyten und andererseits der parallel verlaufende Transport von Elektronen durch einen äußeren Leiter, um die Ionen nach dem Transportvorgang in einen elektrisch neutralen Zustand zurückzuversetzen.

Durch elektrische Verbindung der räumlich getrennten Reaktionszonen kann ein Teil der dabei umgesetzten Reaktionsenthalpie direkt als elektrischer Strom gewonnen werden. Üblicherweise werden mehrere elektrisch in Serie geschaltete Brennstoffzellen aufeinander gestapelt und ein solchermaßen gebildeter Stapel als Stromquelle verwendet. Eine einzelne Brennstoffzelle besteht dabei aus einer Elektrolyteinheit wie einer Membran sowie aus zwei mit Katalysatormaterial belegten Elektroden. Die Membran befindet sich trennend zwischen den Reaktanden und weist eine Ionenleitfähigkeit auf, beispielsweise eine $H^+$-Protonenleitfähigkeit oder eine $O_2$-Leitfähigkeit. Die Elektroden sind unter anderem zum Abgriff des von der Brennstoffzelle erzeugten elektrischen Stroms erforderlich.

Die Fluide (auch Reaktionsfluide oder Arbeitsfluide genannt), beispielsweise Wasserstoff und Sauerstoff, und das Reaktionsprodukt Wasser sowie gegebenenfalls ein Fluid (auch Temperier- oder Kühlfluid genannt), das zur Abführung von überschüssiger Reaktionswärme dient, strömen durch Fluidkanäle in die Bereiche der Reaktionszonen hinein und aus ihnen hinaus. Insbesondere bei Verwendung eines wärmeabführenden Fluids wird durch eine thermische Verbindung der jeweiligen Fluidkanäle für einen ausreichenden Wärmeübertrag zwischen den jeweiligen Fluiden gesorgt. Ein Kanalsystem von Fluidkanälen für ein bestimmtes Fluid wird allgemein auch als Flowfield oder Strömungsfeld bezeichnet.

Es ist bekannt, die in einer Brennstoffzelle entstehende Abwärme zumindest teilweise über ein Temperierfluid, das durch ein separates Kühlkanalsystem strömt, abzuführen. Da die Temperaturdifferenz zwischen Brennstoffzelle und Umgebung üblicherweise geringer ist als bei einem Verbrennungsmotor vergleichbarer Leistung, ist der Kühlungsaufwand in der Regel größer.

Es sind Brennstoffzellenstapel bekannt, bei denen Kühlkanalsystem und Kathodenkanalsystem vollständig voneinander getrennt sind. Beispielsweise beschreibt die DE 100 15 360 A1 eine Bipolarplatte für Brennstoffzellen, die aus zwei geprägten Platten besteht. Eine Fläche der geprägten Platten weist jeweils eine positive Kanalstruktur auf und eine andere Fläche weist eine korrespondierende negative Kanalstruktur auf. Durch Verbinden beider Platten ergibt sich ein platteninneres Kanalsystem (auch Strömungsfeld genannt) für ein Kühlmittel und an den Außenflächen jeder Platte ein Kanalsystem für Gasströme.

Beim Einsatz von Bipolarplatten, die aus geprägten Halbschalen hergestellt werden, ergibt sich die Aufgabe, das Kühlfluid aus Zuführungen (auch Ports genannt) in das bipolarplatteninnere Kühlströmungsfeld einzuschleusen, wobei hier ein möglichst geringer Druckverlust bei der Ein- und Ausschleusung sowie ein möglichst geringer zusätzlicher Platzbedarf bezüglich der Bipolarplattenfläche die Schwerpunkte bei der konstruktiven Ausgestaltung darstellen. Ein weiterer besonders wichtiger Konstruktionsschwerpunkt liegt in der zuverlässigen Abdichtung der Zellen im Stapel.

Aus DE 102 24 397 A1 ist eine Bipolarplatte bekannt, bei der die Beaufschlagung des Kühlströmungsfelds von den Zuführungen aus nach dem Prinzip von kommunizierenden Halbschalen stattfindet. Bei der dort dargestellten Geometrie wird ein relativ großer Anteil an Bipolarplattenfläche für die Einleitung des Kühlwassers in das Kühlströmungsfeld benötigt. Dieser Flächenanteil nimmt nicht an der Energieerzeugung teil und verschlechtert das Verhältnis von aktiver Zellfläche zur Gesamtzellfläche erheblich.

Der Erfindung liegt daher die Aufgabe zugrunde, eine Bipolarplatte anzugeben, bei der der erforderliche Platzbedarf für die Ein- und Ausleitung des Kühlfluids in- bzw. aus dem Kühlströmungsfeld weitgehend reduziert ist, um das Verhältnis von aktiver Zellfläche zur Gesamtzellfläche zu erhöhen.

Hinsichtlich der Bipolarplatte wird die Aufgabe erfindungsgemäß gelöst durch die Merkmale des Anspruchs 1.

Vorteilhafte Weiterbildungen sind Gegenstand der Unteransprüche.

Die Erfindung schlägt eine Bipolarplatte vor, die zusammengesetzt ist aus zwei Formteilen, welche ein Kühlströmungsfeld für ein Kühlfluid bilden, wobei die Formteile mit einander gegenüberliegenden Dichtungsnuten versehen sind, deren Bodenflächen unter Bildung eines Spaltes zueinander angeordnet sind. Bei dieser Bipolarplatte mit wenigstens einem Dichtungsnutpaar reduzierter Nuttiefe, z. B. durch reduzierte Prägetiefe, dient dessen Spalt oder auch Zwischenraum zwischen den zueinander angeordneten Bodenflächen gleichzeitig als Strömungskanal für das Kühlfluid. Es wird also die für die Abdichtung grundsätzlich erforderliche Fläche der Bipolarplatte zusätzlich für den Kühlmitteltransport verwendet Auf diese Weise wird eine wesentlich geringere Fläche der Bipolarplatte für die Ein- und Ausleitung des Kühlfluids benötigt als bei den im Stand der Technik bekannten Bipolarplatten. Das Verhältnis von aktiver Zellfläche zur Gesamtfläche einer Brennstoffzelle kann mit einer solchen Bipolarplatte deutlich verbessert werden.

In einer möglichen Ausführungsform umgeben die einander gegenüberliegenden Dichtungsnuten zumindest teilweise eine Zuführung. Hierbei dient der Spalt vorzugsweise als Strömungskanal für das Kühlfluid und verbindet die Zuführung des Kühlfluids und das Kühlströmungsfeld miteinander.

Vorzugsweise weisen die Dichtungsnuten zumindest teilweise entlang ihrer Ausdehnung Randstege auf. Die Randstege der Dichtungsnuten bewirken eine hohe mechanische Stabilität der Formteile. Außerdem kann dadurch die Abdichtung von Reaktionsfluiden gegeneinander und nach außen verbessert werden.

Für den Spalt wird eine Dicke von größer 0, insbesondere von 0,3 mm bis 1 mm oder 2 mm bevorzugt. Diese Dicke ermöglicht eine breite Variation der Strömungsstärke durch den Strömungskanal bei wirksamer Abdichtung der Bipolarplatte. Je höher der Spalt desto geringere Druckverluste treten bei Zuführung des Kühlmediums auf. In einer bevorzugten Ausführungsform weist der Spalt eine Dicke von 0,3 mm bis 0,6 mm auf. In diesem Bereich ist eine besonders gleichmäßige und hinreichend starke Zuströmung des Kühlmediums ermöglicht.

In einer bevorzugten Ausführungsform verbinden mehrere Strömungskanäle, die als Spalte zwischen Paaren von einander gegenüberüegenden Dichtungsnuten ausgebildet sind, auf verschiedenen Wegen die jeweilige Zuführung und das Kühlströmungsfeld. So kann der Druckverlust des Kühlfluids deutlich verringert werden.

Vorzugsweise ist dabei mindestens ein Strömungskanal für einen Nebenstrom vorgesehen, wobei ein Strömungskanal für einen Hauptstrom im Randbereich der Bipolarplatte verläuft. Insbesondere können Dichtungsnutenpaare am Rand der Bipolarplatte verwendet werden, so dass der Kühlmittelein- und -ausleitungsstrom außen um Zuführungen der Reaktionsfluide herumgeleitet wird.

Eine hohe mechanische Stabilität der Bipolarplatte, insbesondere beim und nach dem Verpressen von in die Dichtungsnuten eingelegten Dichtungen, wird erreicht, indem die Formteile im Bereich der Randstege eines Paares von einander gegenüberliegenden Dichtungsnuten gegeneinander abgestützt werden.

Die mechanische Stabilität der Bipolarplatte kann noch erhöht werden, indem zumindest eine der Bodenflächen eines Paares von zwei einander gegenüberliegenden Dichtungsnuten längs der Dichtungsnuten wenigstens eine Sicke aufweist, weiche die Formteile gegeneinander abstutzt.

Für eine besonders bevorzugte Ausgestaltung ist vorgesehen, dass in einem Spalt zwischen einem Paar von einander gegenüberliegenden Dichtungsnuten Noppen und/oder andere Versteifungselemente angeordnet sind, welche die Formteile über die Bodenflächen dieser Dichtungsnuten gegeneinander abstützen. Dies erhöht einerseits die mechanische Stabilität der Bipolarplatte. Andererseits kann dadurch die Strömungsstärke im Strömungskanal vorgegeben werden. Insbesondere können so Druckverlustverhältnisse zwischen Haupt- und Nebenströmen eingestellt werden.

Eine besondere Ausführungsform weist eine Verdickung im Bereich eines zwischen dem Strömungskanal und dem Kühlströmungsfeld angeordneten Strömungsverteilers auf. Dies ermöglicht die Ausbildung von Bipolarplatten, bei denen die Summe der Höhen eines ersten und eines zweiten Fluidkanals einschließlich deren Wandungen größer als die Höhe der Bipolarplatte ist. Die Anordnung solcher Bipolarplatten wird auch als Eierkartonkonfiguration bezeichnet

In einer bevorzugten Ausgestaltung verlaufen erste Kanäle eines Strömungsfeldes für ein Reaktionsfluid in einem ersten Mäandermuster und zweite Kanäle dieses Strömungsfeldes in einem zweiten, entgegengesetzt oder quer orientierten Mäandermuster. Dadurch kann die Zellfläche durch eine zentral in der Mitte zwischen den Zuführungen erfolgende Einströmung von den Strömungskanälen zum Strömungsfeld effizient genutzt werden.

Vorzugsweise verläuft hierbei im mittleren Bereich des Strömungsfeldes für das Reaktionsfluid mindestens ein weiterer Kanal geradlinig. Dieser geradlinig und die anderen mäanderförmig verlaufenden Kanäle können durch Strömungshindemisse wie Noppen oder andere Versteifungselemente hinsichtlich eines einheitlichen Druckverlustes gestaltet werden.

In einer weitergehenden Ausgestaltung ist ein im Bereich von Nasenstegen liegender Sackkanal vorteilhafterweise auf einer Kathodenseite oder vorzugsweise auf einer Anodenseite der Bipolarplatte angeordnet. Ein solcher reichert sich mit zunehmendem Betrieb einer Brennstoffzelle mit Inertgas an und verhindert durch diese inerte Masse einen hydraulischen Kurzschiussstrom eines angereicherten Reaktionsmediums durch sogenanntes Überspringen eines Nasenstegs.

Vorteilhafterweise liegen Zuführungen für Reaktionsfluide einander auf der Bipolarplatte diagonal gegenüber.

In einer bevorzugten Ausführungsform sind Spalte von Paaren von einander gegenüberliegenden Dichtungsnuten, die entlang der Längskanten der Bipolarplatte verlaufen, bereichsweise mit Strömungshindemissen versehen. Dadurch kann eine für die Kühlung unwirksame Kühtfluidströmung entlang der Längskanten, die einen Fluss des Kühlfluids am Kühlstromfeld vorbei bedeutet, vermieden werden.

Ausführungsbeispiele der Erfindung werden anhand einer Zeichnung näher erläutert. Darin zeigen:

Fig. 1          einen Ausschnitt einer Bipolarplatte im Querschnitt,

Fig. 2a          einen Ausschnitt einer Bipolarplatte in Draufsicht im Bereich von Zuführungen für Fluide,

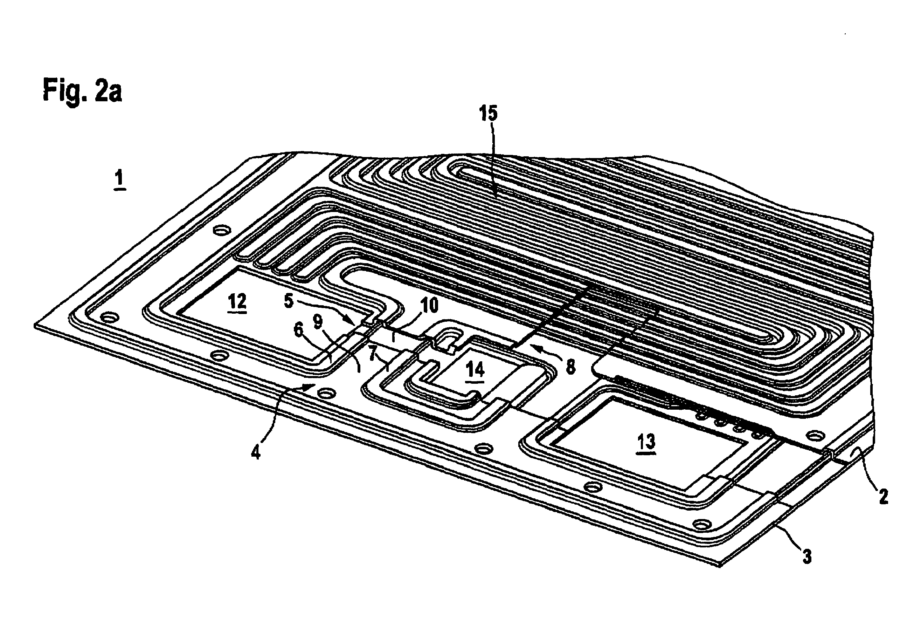

Fg. 2b          einen vergrößerten Ausschnitt aus der Figur 2a im Bereich eines Verstärkungselements,

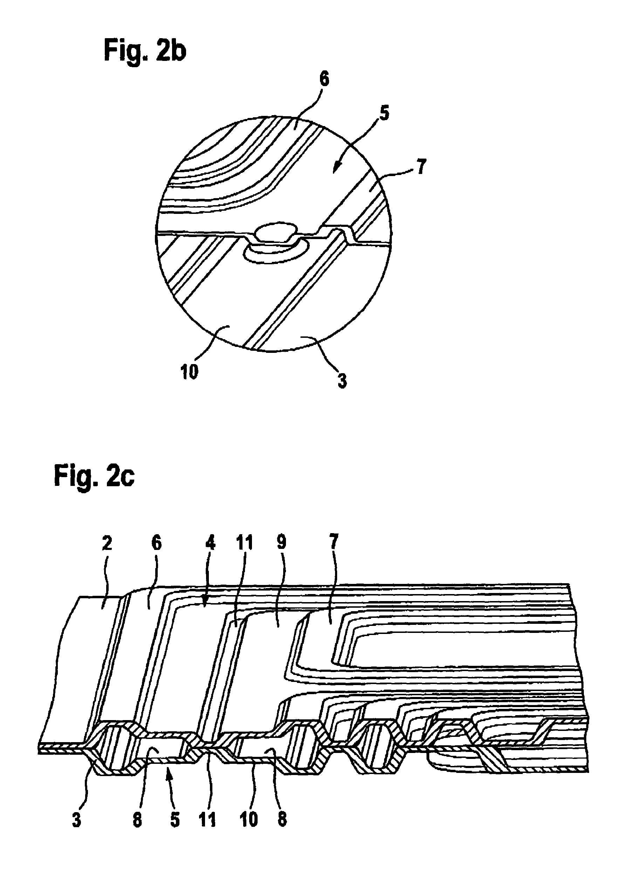

Fig. 2c          einen Querschnitt durch die Bipolarplatte gemäß Fig. 2a im Bereich einer Zuführung,

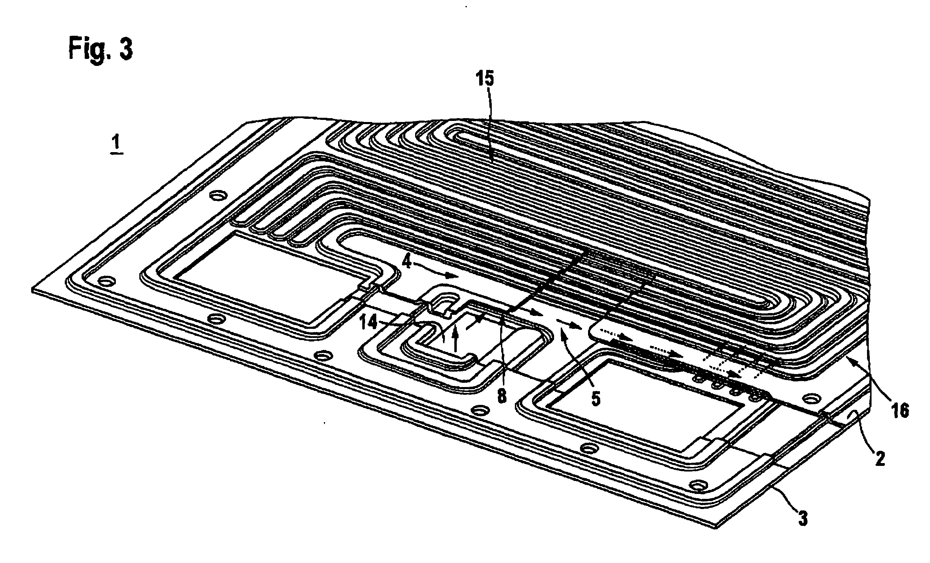

Fig. 3          einen Ausschnitt einer Bipolarplatte in Draufsicht im Bereich von Zuführungen für Fluide mit Strömungsfluss,

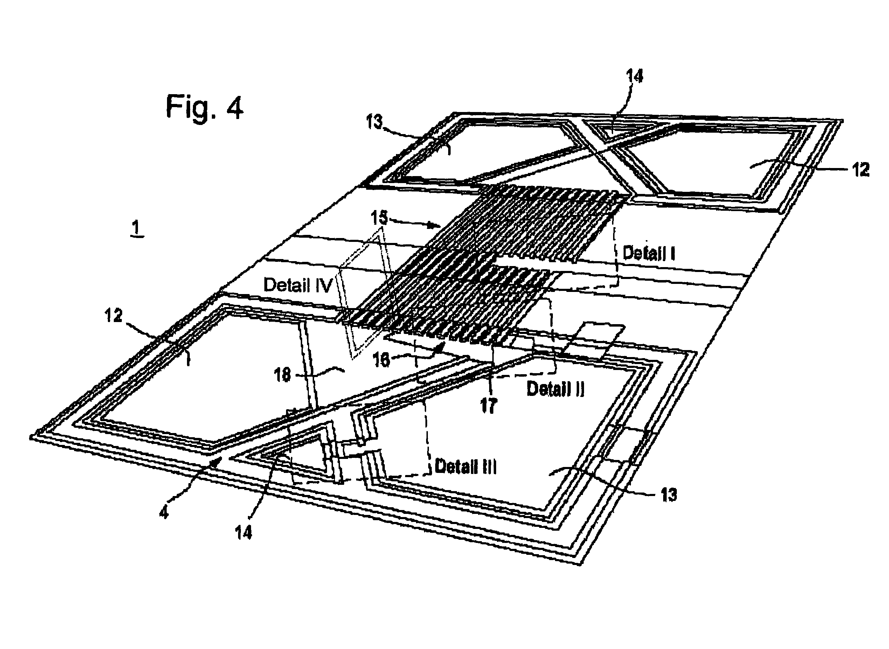

Fig.4          eine Draufsicht auf eine mögliche Ausführungsform für eine Bipolarplatte mit Details I bis IV,

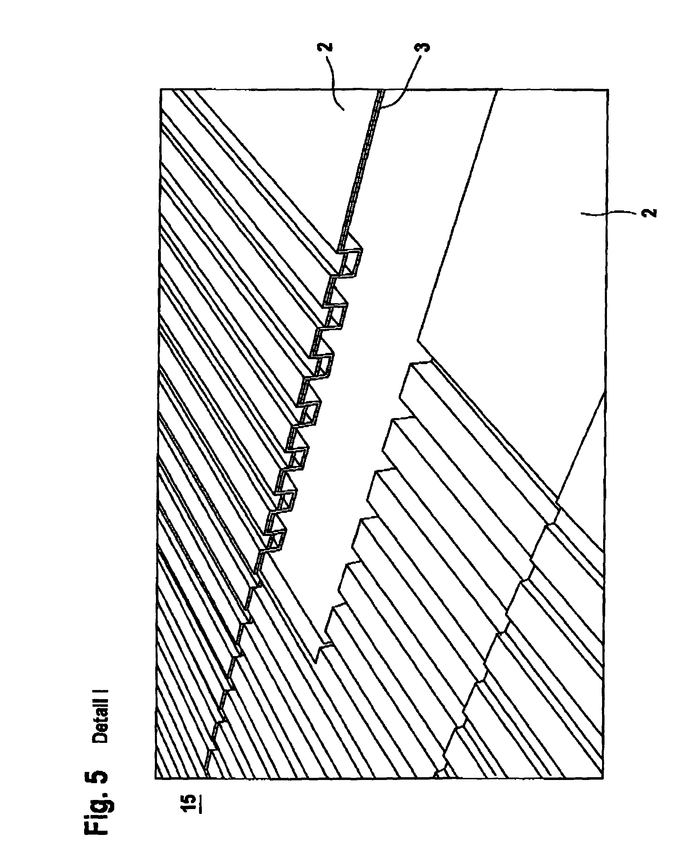

Fig. 5 bis 9    Detail I bis IV gemäß Figur 4,

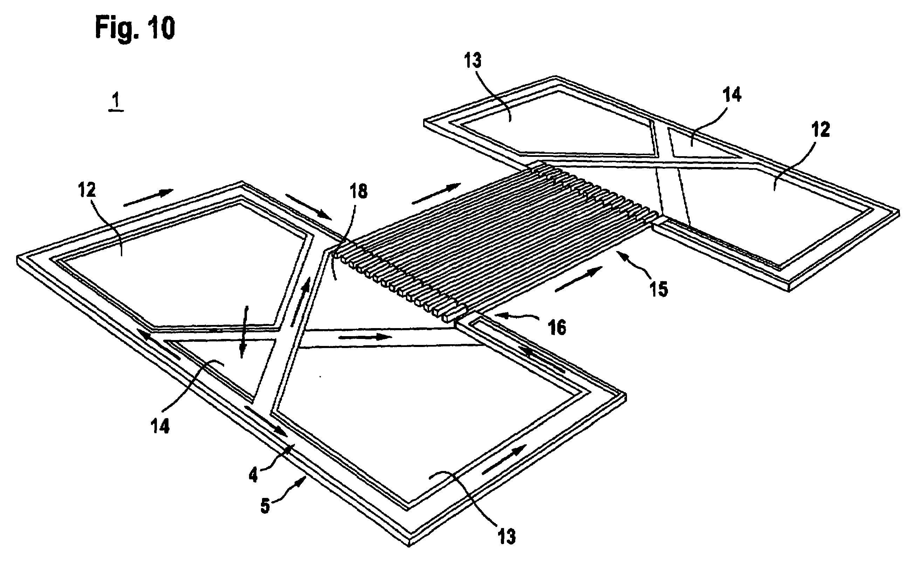

Fig. 10          Kühlfluidströmungsfluss durch eine Bipolarplatte, und

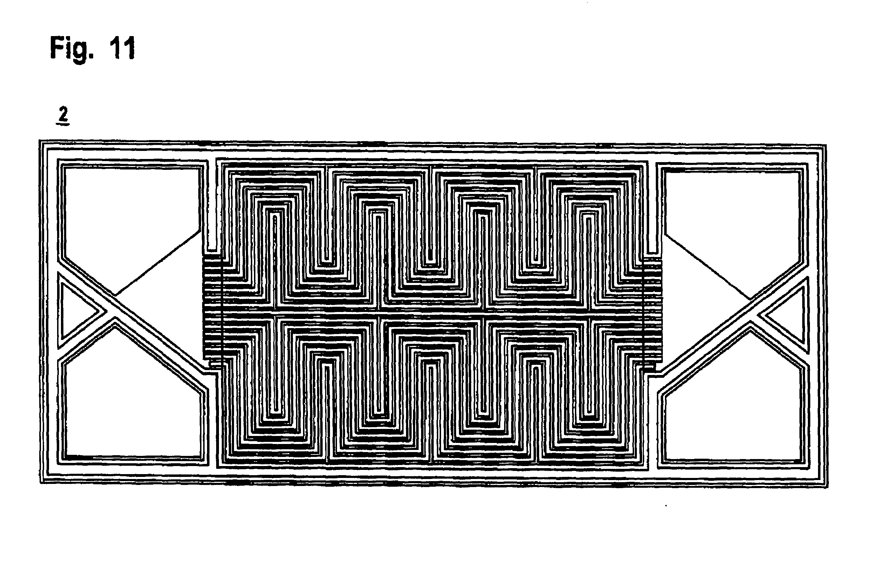

Fig. 11          Strömungsflussfeld für ein Reaktionsfluid.

Einander entsprechende Teile sind in allen Figuren mit den gleichen Bezugszeichen versehen.

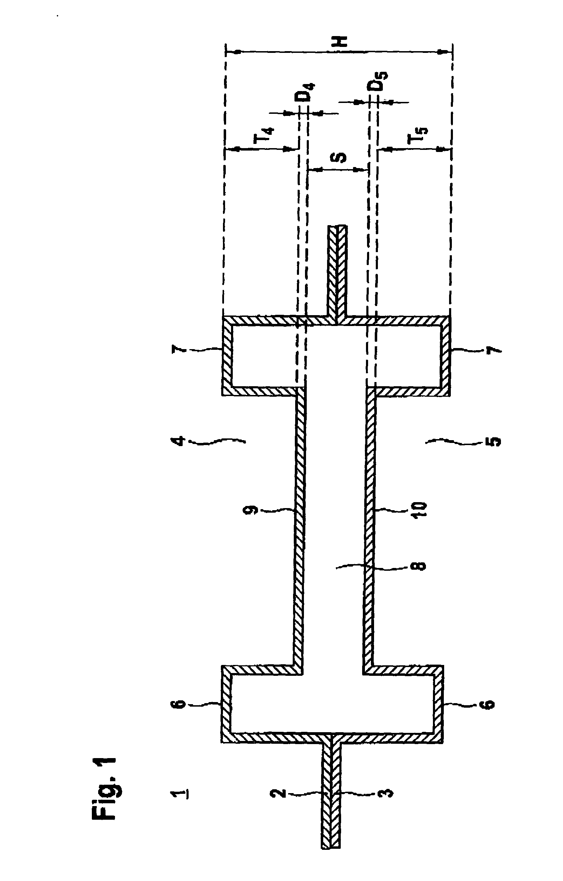

Figur 1 zeigt einen Ausschnitt einer erfindungsgemäßen Bipolarplatte 1, zusammengesetzt aus einem ersten Formteil 2 und einem zweiten Formteil 3. Sie weist einander gegenüber angeordnete, schwebende oder federnde Dichtungsnuten 4 und 5 auf, die beispielsweise durch reduzierte Prägetiefen $T_4$, $T_5$ gekennzeichnet sind und mit einem jeweiligen ausgeprägten ersten Randsteg 6 und einem entsprechenden zweiten Randsteg 7 versehen sind. Daraus resultiert ein Spalt 8 zwischen den Bodenflächen 9, 10 der Dichtungsnuten 4, 5. Mit anderen Worten ist die Summe der Tiefen $T_4$, $T_5$ der Dichtungsnuten 4, 5 auf beiden Seiten der Bipolarplatte 1 zusammen mit den Wandstärken $D_2$, $D_3$ der Einzelformteile 2, 3 kleiner als die der Gesamthöhe H der Bipolarplatte 1, insbesondere liegt die Summe der Tiefen $T_4$, $T_5$ und der Wandstärken $D_2$, $D_3$ um eine Spaltdicke S > 0 unter der Gesamthöhe H gemäß:

$$T_4 + T_5 + D_2 + D_3 + S = H$$

Dabei ist die Spaltdicke S > 0, bevorzugt ist die Spaltdicke S > 0,3 mm, besonders bevorzugt 0,3 mm < S < 0,6 mm. Der Betrag dieser Spaltdicke S korrespondiert mit der Durchflusshöhe, mit der das Kühlfluid von einer Zuführung in das Kühlströmungsfeld einströmt. Die Spaltdicke S kann auch bis zu einem oder zwei Millimeter betragen.

Die ausgeprägten Randstege 6, 7 dienen der mechanischen Stabilität. Die Außenschenkel der Randstege 6, 7 der beiden Dichtnuten 4, 5 sind zu diesem Zweck entsprechend der Bipolarplattenhöhe H gegeneinander abgestützt.

Alternativ ist eine lokale Abstützung mit Noppen und/oder anderen Versteifungselementen möglich, die die Spaltdicke S überbrücken und dennoch einen Kühlfluidfluss um die Noppenfläche herum zulassen.

In Figur 2a ist eine Bipolarplatte 1 teilweise geschnitten und perspektivisch dargestellt. Neben Reaktionsfluidzuführungen 12, 13 ist eine Zuführung 14 für Kühlfluid erkennbar, die von einem U-förmigen, dichtgeprägten Rand teilweise umgeben ist. An der offenen Seite verläuft ein Paar einander gegenüberliegender Dichtungsnuten 4, 5 mit Spalt 8 als Strömungskanal für Kühlfluid. Das Paar von Dichtungsnuten 4, 5 umgibt die Zuführung 14 vollständig und verläuft außerdem entlang des Umfangs der Bipolarplatte 1 und insbesondere zum Kühlströmungsfeld 15.

Auch die Reaktionsfluide werden durch die vollständig um die Reaktionsfluidzuführungen 12, 13 verlaufenden Paare von Dichtungsnuten 4, 5 im Bereich der Einströmung in das jeweilige, nicht dargestellte Strömungsfeld gegeneinander und gegenüber dem Außenraum abgedichtet.

In Figur 2b ist eine lokale Versteifung der Bipolarplatte 1 durch eine in dem Spalt 8 des Paares der Dichtungsnuten 4, 5 angeordnete Noppe in einem Ausschnitt vergrößert dargestellt.

Figur 2c zeigt einen anderen Ausschnitt einer Bipolarplatte mit zweistufig ausgeführten Dichtungsnuten 4, 5. In beiden Bodenflächen 9, 10 verläuft eine jeweilige Sicke 11, die die Formteile 2, 3 gegeneinander abstützt. Eine solche Anordnung wird vorzugsweise in Bereichen eingesetzt, in denen keine Strömung in Dichtungsnutspalten 8 erforderlich ist, beispielsweise im Randbereich einer Bipolarplatte 1. Diese zweistufige Ausführung bewirkt zum einen eine auf den Umfang bezogen konstante Auflagehöhe für in den Dichtungsnuten 4, 5 liegende Dichtungen und zum anderen eine hohe mechanische Stabilität durch eine durchgehende Versteifung.

Bei Verwendung einer zweistufigen Dichtungsnut 4, 5 mit Abstützung entlang der Dichtungsnutachse durch mindestens eine Sicke 11 ergibt sich darüber hinaus der Vorteil, dass bei Verwendung einer durch Stanzen herstellbaren Flachdichtung ein vergleichbarer Dichteffekt erzielt werden kann wie bei Verwendung einer zweilippigen Dichtung, da die Dichtkraft im Bereich der mittigen Abstützung geringer ausfällt als an den Randstegen 6, 7 und sich somit eine doppelte Dichtfunktion ergibt.

Figur 3 zeigt in einer Bipolarplatte 1 gemäß Figur 2 durch Pfeile angedeutet einen durch den Spalt 8 als Strömungskanal ermöglichten Strömungsverlauf des Kühlfluids von der Zuführung 14 zum Kühlströmungsfeld 15. Das Kühlfluid wird in dem Spalt 8 der Dichtungsnuten 4, 5 von der Zuführung 14 zum Einströmbereich 16 geführt und dort in das Kühlströmungsfeld 15 eingeleitet.

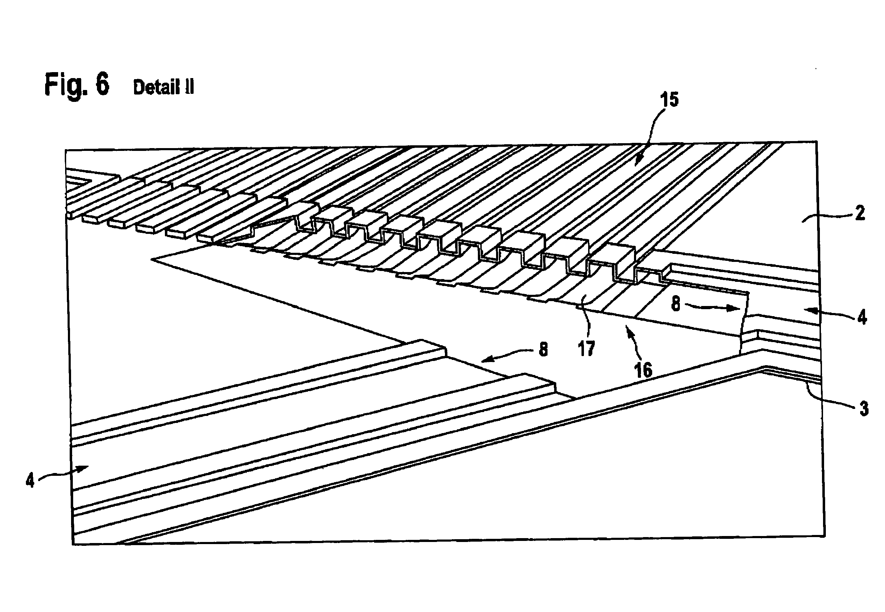

In Figur 4 ist eine besonders bevorzugte Ausführungsform der erfindungsgemäßen Bipolarplatte 1 dargestellt. Sie ist mit einem Kühlströmungsfeld 15 in Eierkartonkonfiguration versehen, das in Figur 5 als Detail I näher dargestellt ist. Die Bipolarplatte 1 weist im Bereich 16 der Einströmung, die als Detail II in Figur 6 näher dargestellt ist, eine lokale Verdickung 17 auf, so dass das Kühlfluid mit konstanter Durchflusshöhe in das Kühlströmungsfeld 15 eingeleitet werden kann.

Die Bipolarplatte 1 ist mit einem vereinfachten Kühlströmungsfeld 15 versehen, das insbesondere durch den zentralen Einströmbereich 16 in der Mitte zwischen den Zuführungen 12, 13, 14 gezeichnet ist. In Figur 5 sind Teile des oberen Formteils 2 geschnitten dargestellt, um die mögliche Strömung des Kühlfluids deutlicher darstellen zu können.

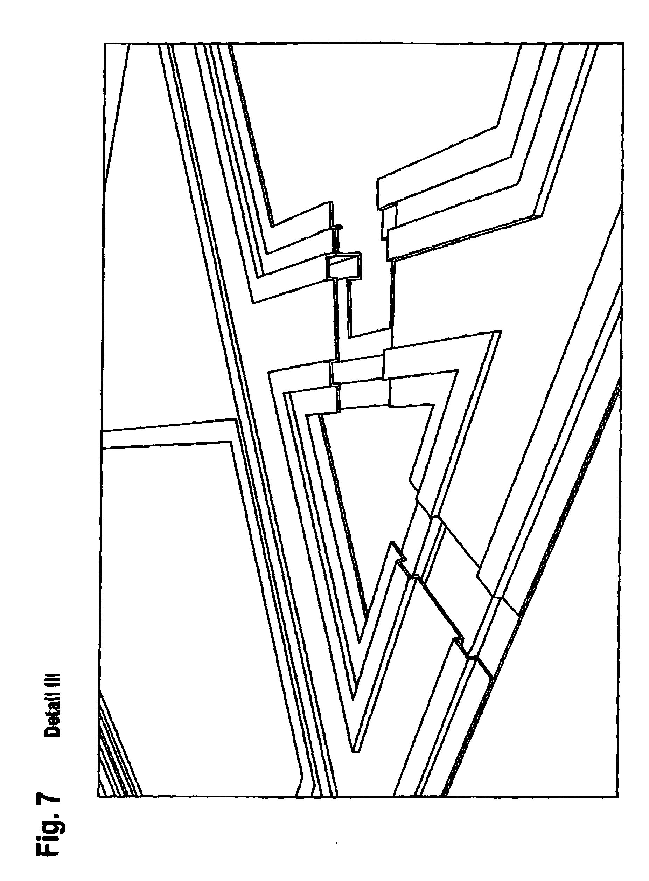

Die Versorgung des Kühtströmungsfeldes 15 mit dem Kühlfluid erfolgt dabei über den als Strömungskanal wirkenden Spalt 8 zwischen Dichtungsnutenbodenflächen 9, 10 der anoden- bzw. kathodenseitigen Formteile 2, 3, was als Detail III in Figur 7 vergrößert dargestellt ist.

Die dickste Stelle der Bipolarplatte 1 ist in dieser Ausführungsform vorzugsweise kleiner als oder gleich dick wie die Summe aus Gesamthöhe H der Bipolarplatte 1 im Bereich der aktiven Zellfläche und aus der maximalen Dicke der anliegenden, nicht abgebildeten Membran-Elektrolyt-Einheit ohne Dichtungen.

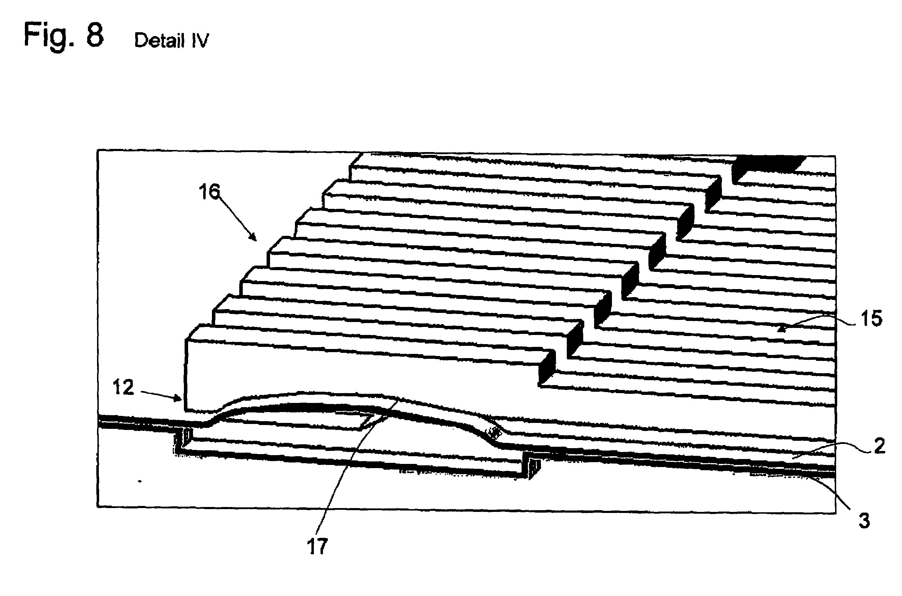

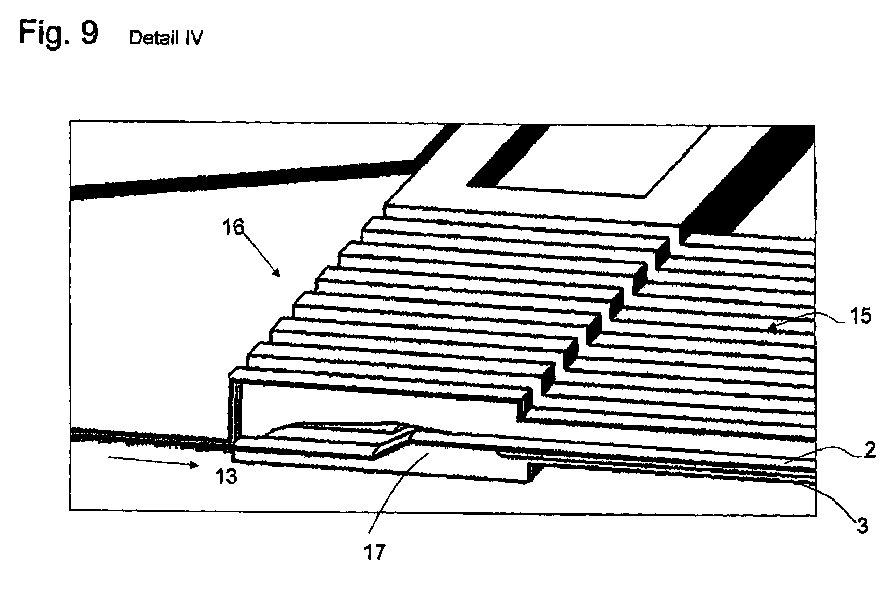

In den Figuren 8 und 9 ist als Detail IV schematisch jeweils ein vergrößerter Längsschnitt der Bipolarplatte 1 durch Reaktionsfluidzuführungen 12 bzw. 13 im Bereich 16 der Einströmung (= Einströmbereich 16) gezeigt. Der Einströmbereich 16 dient als Strömungsverteiler der Reaktionsfluide in die zugehörigen Strömungsfelder und des Kühlfluids in das Kühtströmungsfeid 15. Beide Reaktionsfluidzuführungen 12 und 13 weisen im Beriech 16 die Verdickung 17 auf. Hierdurch wird das Kühlfluid mit konstanter Durchflusshöhe in das Kühlströmungsfeld 15 geleitet. Darüber hinaus gestattet eine derartige lokale Verdickung 17 des Kühlflowfields im Bereich der Reaktionsfluidzuführungen 12 und 13 die Darstellung einer Bipolarplatte mit innenliegendem Kühlflowfield, bei der die Summe der Höhen der Reaktionsfluidzuführungen 12 und 13 einschließlich deren Wandungen im Bereich der aktiven Zellfläche größer als die Höhe der Bipolarplatte 1 ist. Diese Anordnung wird auch als Eierkartonkonfiguration bezeichnet. Bei der in Figur 8 dargestellten Reaktionsfluidzuführung 12 handelt es sich beispielsweise um einen kathodenseitigen Strömungskanal und bei der in Figur 9 dargestellten Reaktionsfluidzuführung 13 um einen anodenseitigen Strömungskanal.

Figur 10 stellt eine Übersicht über den Strömungsverlauf des Kühlfluids in der Bipolarplatte 1 der Figuren 4 bis 7 dar. Anoden- und Kathodenfluid treten von den Zuführungen 12, 13 ausgehend über eine Vorzone 18 in ihr jeweiliges, nicht abgebildetes Strömungsfeld ein, durchströmen es und treten auf der gegenüberliegenden Seite an den jeweiligen Zuführungen 12, 13 wieder aus der Bipolarplatte 1 aus. Das Kühlfluid tritt eine Zuführung 14 in die Bipolarplatte 1 ein, strömt im Bereich des als Strömungskanal dienenden Spaltes 8 der Dichtungsnuten 4, 5 in den Einströmbereich 16, tritt dort in das elerkartonförmig aufgebaute Kühiströmungsfeld 15 ein, durchströmt es und verlässt in analoger Weise auf der gegenüberliegenden Seite die Bipolarplatte 1.

In Figur 11 ist ein Strömungsfeld für ein Kathodenfluid beziehungsweise für ein Anodenfluid schematisch dargestellt. Es ermöglicht eine effiziente Ausnutzung der Fläche einer Brennstoffzelle hinsichtlich des Verhältnisses von aktiver Zeitfläche zur Gesamtzellfläche. Das Strömungsfeld ist zu diesem Zweck entlang der Längsachse der Bipolarplatte 1 in Querrichtung besonders gestaltet. Ein Teil der Kanäle des Strömungsfeldes verläuft in einem ersten Mäandermuster in der einen Hälfte der Bipolarplatte 1. Ein zweiter Teil der Kanäle des Strömungsfeldes verläuft in einem zweiten, entgegengesetzt orientierten Mäandermuster in der anderen Hälfte der Bipolarplatte 1. Etwa jeweils die Hälfte des in das Strömungsfeld einströmenden Reaktionsfluids wird nach rechts bzw. links gelenkt und dann den zwei im Wesentlichen parallel verlaufenden Mäandem über die aktive Zellfläche geführt.

Daneben liegt in diesem Strömungsfeld ein zentraler Kanal vor, der die beiden Hälften voneinander trennt und ohne Umlenkungen direkt zur anderen Seite verläuft. Dieser Kanal kann strömungstechnisch unter Verwendung von Strömungshindemissen, beispielsweise Noppen, Schwellen, etc., so ausgelegt werden, dass sich druckvertustbedingt eine flächenspezfisch homogene Versorgung der aktiven Zellfläche mit dem Reaktionsfluid ergibt.

Entsprechendes gilt für die mit reduzierter Prägetiefe geformte Dichtungsnut 4 im Bereich der Längskanten. Auch hier kann der Druckverlust des Kühlfluids durch entsprechende Sperrelemente wie Noppen, Stege oder Einlegestücke definiert vorgegeben werden.

Grundsätzlich besitzt eines der beiden Strömungsfelder für ein Reaktionsfluid konstruktionsbedingt zwischen einem und drei Kanälen mehr als das zugehörige gegenüberliegende Strömungsfeld für das jeweilige andere Reaktionsfluid.

Im Bereich von Nasenstegen ergeben sich bei mäanderförmigen Strömungsfeldern Sackkanäle auf dem jeweiligen gegenüberliegenden Strömungsfeld. Vorteilhafterweise werden derartige Sackkanäle auf der Anodenseite angeordnet, da sich diese mit zunehmendem Betrieb mit Inertgas anreichern und durch diese inerte Masse ein hydraulischer Kurzschlussstrom eines angereicherten Reaktionsmediums durch Überspringen eines Nasenstegs vermieden wird.

**Patentansprüche**

1. Bipolarplatte (1) für einen Brennstoffzellenstapel, die zusammengesetzt ist aus zwei Formteilen (2, 3), welche ein Kühlströmungsfeld (15) für ein Kühlfluid bilden, wobei die Formteile (2, 3) mit einander gegenüberliegenden Dichtungsnuten (4, 5) versehen sind, deren Bodenflächen (9, 10) unter Bildung eines Spaltes (8) zueinander angeordnet sind.

2. Bipolarplatte (1) nach Anspruch 1, **dadurch gekennzeichnet, dass** die einander gegenüberliegenden Dichtungsnuten (4, 5) zumindest teilweise eine Zuführung (12, 13, 14) umgeben.

3. Bipolarplatte (1) nach Anspruch 2, **dadurch gekennzeichnet, dass** der Spalt (8) als Strömungskanal für das Kühlfluid dient und eine Zuführung (14) des Kühlfluids und das Kühlströmungsfeld (15) miteinander verbindet.

4. Bipolarplatte (1) nach einem der vorhergehenden Ansprüche, **dadurch gekennzeichnet, dass** der Spart (8) eine Dicke von 0,3 mm bis 1 mm aufweist.

5. Bipolarplatte (1) nach einem der vorhergehenden Ansprüche, **dadurch gekennzeichnet, dass** mehrere Strömungskanäle, die als Spalte (8) zwischen Paaren von einander gegenüberliegenden Dichtungsnuten (4, 5) ausgebildet sind, auf verschiedenen Wegen die jeweilige Zuführung (14) und das Kühlströmungsfeld (15) verbinden.

6. Bipolarplatte (1) nach Anspruch 5, **dadurch gekennzeichnet, dass** mindestens ein Strömungskanal für einen Nebenstrom vorgesehen ist, wobei ein Strömungskanal für einen Hauptstrom im Randbereich der Bipolarplatte (1) verläuft.

7. Bipolarplatte (1) nach einem der vorhergehenden Ansprüche, **dadurch gekennzeichnet, dass** die Formteile (2, 3) im Bereich der Randstege (6, 7) eines Paares von einander gegenübediegenden Dichtungsnuten (4, 5) gegeneinander abgestützt sind.

8. Bipolarplatte (1) nach einem der vorhergehenden Ansprüche, **dadurch gekennzeichnet, dass** zumindest eine der Bodenflächen (9, 10) eines Paares von zwei einander gegenüberliegenden Dichtungsnuten (4, 5) längs der Dichtungsnuten (4, 5) wenigstens eine Sicke (11) aufweist, welche die Formteile (2, 3) gegeneinander abstützt.

9. Bipolarplatte (1) nach einem der vorhergehenden Ansprüche, **dadurch gekennzeichnet, dass** in einem Spalt (8) zwischen einem Paar von einander gegenüberliegenden Dichtungsnuten (4, 5) Noppen und/oder andere Versteifungselemente angeordnet sind, welche die Formteile (2, 3) über die Bodenflächen (9, 10) dieser Dichtungsnuten (4, 5) gegeneinander abstützen.

10. Bipolarplatte (1) nach einem der vorhergehenden Ansprüche, **dadurch gekennzeichnet, dass** Spalte (8) von Paaren von einander gegenüberliegenden Dichtungsnuten (4, 5), die entlang der Längskanten der Bipolarplatte (1) verlaufen, bereichsweise mit Strömungshindemissen versehen sind.

11. Bipolarplatte (1) nach einem der vorhergehenden Ansprüche, **gekennzeichnet durch** eine Verdickung (17) im Bereich eines zwischen dem Strömungskanal und dem Kühlströmungsfeld (15) angeordneten Einströmbereichs (16).

12. Bipolarplatte (1) nach einem der vorhergehenden Ansprüche, **dadurch gekennzeichnet, dass** erste Kanäle eines Strömungsfeldes für ein Reaktionsfluid in einem ersten Mäandermuster und zweite Kanäle dieses Strömungsfeldes in einem zweiten, entgegengesetzt orientierten Mäandermuster verlaufen.

13. Bipolarplatte (1) nach Anspruch 12, **dadurch gekennzeichnet, dass** im mittleren Bereich des Strömungsfeldes für das Reaktionsfluid mindestens ein gerader Kanal verläuft.

14. Bipolarplatte (1) nach Anspruch 12 oder 13, **dadurch gekennzeichnet, dass** ein im Bereich von Nasenstegen liegender Sackkanal auf einer Anoden- oder Kathodenseite der Bipolarplatte (1) angeordnet ist.

15. Bipolarplatte (1) nach einem der vorhergehenden Ansprüche, **dadurch gekennzeichnet, dass** Zuführungen (12, 13) für Reaktionsfluide einander auf der Bipolarplatte (1) diagonal gegenüber liegen.

16. Bipolarer Brennstoffzellenstapel mit einer Bipolarplatte (1) nach einem der Ansprüche 1 bis 15.

**Fig. 1**

EP 1 791 201 A1

Fig. 2a

# Fig. 2b

# Fig. 2c

Fig. 3

Fig. 4

EP 1 791 201 A1

**Fig. 5** Detail I

EP 1 791 201 A1

**Fig. 6**  Detail II

Fig. 7    Detail III

Fig. 8   Detail IV

Fig. 9   Detail IV

**Fig. 10**

Fig. 11

2

**Europäisches Patentamt**

# EUROPÄISCHER RECHERCHENBERICHT

Nummer der Anmeldung

EP 06 02 4598

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2004/131905 A1 (ENJOJI NAOYUKI [JP] ET AL) 8. Juli 2004 (2004-07-08) * Abbildungen 4,11 * ----- | 1-4,7, 13,15,16 | INV. H01M8/02 H01M8/04 |
| A | US 2004/106028 A1 (SUGIURA SEIJI [JP] ET AL) 3. Juni 2004 (2004-06-03) * Zusammenfassung; Abbildungen 1-4 * ----- | 1-16 | |
| A | DE 103 01 052 A1 (DAIMLER CHRYSLER AG [DE]) 22. Juli 2004 (2004-07-22) * Zusammenfassung; Abbildungen 4,5 * ----- | 1-16 | |
| A | WO 2005/031900 A2 (NUVERA FUEL CELLS EUROP S R L [IT]; TORO ANTONINO [IT] NUVERA FUEL CEL) 7. April 2005 (2005-04-07) * Zusammenfassung; Abbildungen 1,2 * ----- | 1-16 | |

RECHERCHIERTE SACHGEBIETE (IPC)

H01M

Der vorliegende Recherchenbericht wurde für alle Patentansprüche erstellt

| Recherchenort | Abschlußdatum der Recherche | Prüfer |
|---|---|---|
| München | 27. Februar 2007 | Brune, Markus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 02 4598

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-02-2007

| Im Recherchenbericht angeführtes Patentdokument | Datum der Veröffentlichung | Mitglied(er) der Patentfamilie | Datum der Veröffentlichung |
|---|---|---|---|
| US 2004131905 A1 | 08-07-2004 | JP 2004158217 A | 03-06-2004 |
| US 2004106028 A1 | 03-06-2004 | JP 2004193110 A | 08-07-2004 |
| DE 10301052 A1 | 22-07-2004 | KEINE | |
| WO 2005031900 A2 | 07-04-2005 | BR PI0414962 A | 07-11-2006 |
| | | CA 2538961 A1 | 07-04-2005 |
| | | CN 1860633 A | 08-11-2006 |
| | | EP 1668725 A2 | 14-06-2006 |
| | | KR 20060090698 A | 14-08-2006 |
| | | US 2006263667 A1 | 23-11-2006 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10015360 A1
- DE 10224397 A1